# EUROPEAN PATENT SPECIFICATION

(11) **EP 4 570 058 B1**
(45) Date of publication and mention of the grant of the patent: **02.12.2026**
(21) Application number: 24219509.7
(22) Date of filing: 12.12.2024
(51) Int. Cl.: A01D 90/06, A01F 12/40

(54) **METHOD FOR REDUCTION OF CHOPPER RECUT**
VERFAHREN ZUR REDUZIERUNG EINER CHOPPER-NEUSCHNEIDUNG
PROCÉDÉ DE RÉDUCTION DE LA RECOUPE D'UN HACHEUR

(30) Priority: 13.12.2023 US 202318538001
(43) Date of publication of application: 18.06.2025
(73) Proprietor: CNH Industrial Belgium N.V., 8210 Zedelgem (BE); CNH Industrial America LLC, New Holland, PA 17557 (US)
(72) Inventor: Linde, Cooper, New Holland, 17557 (US); Passchyn, Tim, 8210 Zedelgem (BE); Todderud, Stephen, New Holland, 17557 (US); Mommerency, Gilles, 8210 Zedelgem (BE); Harmon, Zachary, New Holland, 17557 (US); Woodward, Seth, New Holland, 17557 (US); Desmet, Stefaan, 8210 Zedelgem (BE); Duquesne, Frank, 8210 Zedelgem (BE)
(74) Representative: CNH Industrial IP Department

(56) References cited:
- GB-A- 1 534 965
- US-A1- 2003 109 294
- US-A1- 2017 086 379
- US-A1- 2018 084 718
- US-A1- 2019 059 219

## Description

### BACKGROUND OF THE INVENTION

Agricultural machines, such as combine harvesters, typically process crop material, and deposit a portion of the material on the ground behind the machine. As the purpose of the harvester is to collect grain, the material that is deposited is primarily material other than grain ("MoG"), such as chaff and stalks. This is commonly called "residue." It is generally desirable to minimize the size of the residue pieces, and to spread the residue evenly across the path of the machine. For this purpose, the machine may include a chopper to reduce the residue size, and a spreader to distribute the residue.

The chopper typically comprises a series of knives that rotate at a high speed on a shaft and are partially enclosed by a shroud that forms a chopper housing. The residue enters the shroud, and the knives strike and cut the residue. A typical chopper also has counterknives that extend radially towards the shaft, and between adjacent pairs of the rotating knives. The counterknives face towards the incoming stream of residue, and provide additional cutting edges. The counterknives can be mounted on their own shaft or on a support that can be moved to extend and retract the counterknives into and from the chopper housing.

Typical counterknives are positioned below the chopper housing, such as below a concave pan assembly that forms the bottom part of the chopper housing. Examples of such devices are shown in United States Patent Nos. 7,484,350, 7,677,965, and 8,141,805, in U.S. Patent Pub. No. 2023/0148476 A1, and in U.S. Provisional Application Serial No. 63/459,058. The counterknives are mounted on a pivoting support that is rotated to move the counterknife blades up to enter the chopper housing. In this arrangement, the pivot axis is located forward of the blades, and the blades trail behind the pivot axis, with respect to the flow direction of the residue. The blades are mounted to a plate that extends generally radially from the pivot axis, with the counterknife blades oriented generally tangentially to the pivot axis.

Upstream of the counterknives, the chopper housing opens to form an inlet for fresh unchopped residue to enter the chopper for processing by the rotating knives and counterknives. The fresh unchopped residue is initially engaged by the rotating knives, which, in addition to cutting the residue material, transport the material in a rotary flow to the counterknives for additional cutting/chopping. Downstream (with respect to the flow direction of the residue) of the counterknives, the chopper housing opens to form an outlet for cut/chopped material to exit the chopper housing in a generally tangential to radial (centrifugal) direction with respect to the shaft of the rotating knives.

The high speed of the rotating knives generates significant air currents that can interfere with the exiting material flow and carry crop material past the counterknives and chopper housing outlet. Recirculating material remaining within the rotary flow of material downstream of the chopper housing outlet can impair function of the chopper apparatus in several ways. The recirculated material ends up being recut, unnecessarily drawing power and causing wear to the knives and other wearing parts of the chopper. Excessive recirculating material can also clog or otherwise accumulate undesirably within the chopper, potentially causing further power losses and/or unnecessary wear.

The inventors have determined that further improvements can be made to agricultural machine residue chopper assemblies.

US 2003/109294 A1 relates to a vertical crop residue and spreader for an agricultural combine which provides improved residue flow and dispersal over a field compared to horizontal choppers. US 2018/084718 A1 relates to a combine harvester which includes a driver assistance system that regulates the spreading of crop flow exiting the harvester.

This description of the background is provided to assist with an understanding of the following explanations of exemplary embodiments, and is not an admission that any or all of this background information is necessarily prior art.

### SUMMARY OF THE INVENTION

High speed chopping systems generate significant air currents that can interfere with crop flow and carry crop material past chopper counter knives, where it can bypass the chopper outlet and recirculate within the cutting chamber. Re-cutting crop material draws significant power for unnecessary functions and can lead to material plugging. Crop material recirculating past the chopper outlet can also be carried to and can blow out of the cutting chamber inlet against incoming new material to be processed. The present invention takes advantage of air currents generated by the chopper system to blow cut crop material out of the chopper and into a residue spreader system or to return it to the cleaning system. The system uses air currents to blow chopped material that would be entrained and recirculated within the cutting chamber out of the chopper and to redirect it.

Therefore, in one exemplary embodiment, there is provided an agricultural residue chopper assembly comprising: a housing defining a partially enclosed cutting chamber, the housing comprising a housing inlet and a housing outlet with respective sections of housing wall extending between the inlet and outlet; a cutting knife assembly comprising a shaft mounted to rotate in a cutting direction within the cutting chamber about a cutting knife rotation axis extending along a longitudinal direction, the cutting knife assembly comprising a plurality of knives extending from the shaft at respective axial locations along the longitudinal direction, each of the plurality of knives extending from a respective proximal end at the shaft to a respective distal end at a radial distance from the shaft, the radial distance defining an outer radius of a cutting volume; a counterknife assembly comprising one or more counterknives mounted to a counterknife support, the counterknives positioned to extend into the cutting volume at a position, with reference to the cutting direction, downstream from the housing inlet; a first shear bar positioned near a downstream closing of the housing outlet; a second shear bar positioned downstream of the first shear bar near an upstream opening of the housing inlet; and an air catch formed by a radially expanded section of the housing wall between the downstream closing of the housing outlet and the upstream opening of the housing inlet.

In another exemplary aspect, the radially expanded section of the housing wall comprises an upstream section extending downstream from near the housing outlet closing to a middle section extending generally towards the opening of the housing inlet.

In another exemplary aspect, the radially expanded section of the housing wall comprises a downstream section extending from near the upstream opening of the housing inlet a distance generally outward from the cutting volume then curving arcuately upstream generally toward the middle section.

In another exemplary aspect, the upstream section of the radially expanded section of the housing wall is substantially concentric to the outer circumference of the cutting volume and the middle section expands tangentially from the substantially concentric upstream section.

In another exemplary aspect, the middle section of the radially expanded section of the housing wall joins the arcuately curved downstream section to form a continuous radially expanded section of housing wall between the downstream closing of the housing outlet and the upstream opening of the housing inlet.

In another exemplary aspect, the radially expanded section of the housing wall comprises an upstream section extending downstream from near the housing outlet closing to a middle section extending generally towards the opening of the housing inlet, wherein the upstream section of the radially expanded section of the housing wall is substantially concentric to the outer radius of the cutting volume and the middle section expands tangentially from the substantially concentric upstream section, wherein the radially expanded section of the housing wall further comprises a downstream section extending from near the upstream opening of the housing inlet a distance generally outward from the cutting volume then curving arcuately upstream generally toward the housing outlet, and wherein the middle section of the radially expanded section of the housing wall joins the arcuately curved downstream section to form a continuous radially expanded section of housing wall between the downstream closing of the housing outlet and the upstream opening of the housing inlet.

In another exemplary aspect, the radially expanded section of the housing wall comprises an upstream section extending downstream from near the housing outlet closing to a middle section extending generally towards the opening of the housing inlet, wherein the middle section of the radially expanded section of the housing wall ends before reaching a point intersecting a line extending substantially radially from the cutting knife rotation axis through the upstream opening of the housing inlet, wherein the radially expanded section of the housing wall comprises a downstream section extending from near the upstream opening of the housing inlet outward from the cutting volume, curving arcuately around the end of the downstream section to form an opening in the air catch between the middle and downstream sections, and extending generally upstream past the end of the middle section and generally parallel to the middle section to form a reflow conduit for receiving air flow redirected from the cutting chamber by the air catch through the opening between the middle and downstream sections of the radially expanded section of the housing wall.

In another exemplary aspect, the first shear bar is adjustably fixed near the downstream closing of the housing outlet.

In another exemplary aspect, the second shear bar is adjustably fixed near the downstream closing of the housing outlet.

In another exemplary aspect, the second shear bar extends into the cutting volume.

In another exemplary aspect, an agricultural harvester machine comprises: a chassis configured for movement on a surface; and a residue chopper comprising: a housing defining a partially enclosed cutting chamber, the housing comprising a housing inlet and a housing outlet with respective sections of housing wall extending between the inlet and outlet; a cutting knife assembly comprising a shaft mounted to rotate in a cutting direction within the cutting chamber about a cutting knife rotation axis extending along a longitudinal direction, the cutting knife assembly comprising a plurality of knives extending from the shaft at respective axial locations along the longitudinal direction, each of the plurality of knives extending from a respective proximal end at the shaft to a respective distal end at a radial distance from the shaft, the radial distance defining an outer radius of a cutting volume; a counterknife assembly comprising one or more counterknives mounted to a counterknife support, the counterknives positioned to extend into the cutting volume at a position, with reference to the cutting direction, downstream from the housing inlet; a first shear bar positioned near a downstream closing of the housing outlet; a second shear bar positioned downstream of the first shear bar near an upstream opening of the housing inlet; and an air catch formed by a radially expanded section of the housing wall between the downstream closing of the housing outlet and the upstream opening of the housing inlet.

In another exemplary aspect, the agricultural harvester machine further comprises: a threshing and separating system attached to the chassis and configured to deliver crop residue to the residue chopper; and powered wheels configured to move the chassis on the surface.

In another exemplary aspect, the agricultural harvester machine provides that the radially expanded section of the housing wall comprises an upstream section extending downstream from near the housing outlet closing to a middle section extending generally towards the opening of the housing inlet, wherein the upstream section of the radially expanded section of the housing wall is substantially concentric to the outer radius of the cutting volume and the middle section expands tangentially from the substantially concentric upstream section, wherein the radially expanded section of the housing wall further comprises a downstream section extending from near the upstream opening of the housing inlet a distance generally outward from the cutting volume then curving arcuately upstream generally toward the housing outlet, and wherein the middle section of the radially expanded section of the housing wall joins the arcuately curved downstream section to form a continuous radially expanded section of housing wall between the downstream closing of the housing outlet and the upstream opening of the housing inlet.

In another exemplary aspect, the agricultural harvester machine provides that the radially expanded section of the housing wall comprises an upstream section extending downstream from near the housing outlet closing to a middle section extending generally towards the opening of the housing inlet, wherein the middle section of the radially expanded section of the housing wall ends before reaching a point intersecting a line extending substantially radially from the cutting knife rotation axis through the upstream opening of the housing inlet, wherein the radially expanded section of the housing wall comprises a downstream section extending from near the upstream opening of the housing inlet outward from the cutting volume, curving arcuately around the end of the downstream section to form an opening in the air catch between the middle and downstream sections, and extending generally upstream past the end of the middle section and generally parallel to the middle section to form a reflow conduit for receiving air flow redirected from the cutting chamber by the air catch through the opening between the middle and downstream sections of the radially expanded section of the housing wall.

### BRIEF DESCRIPTION OF THE DRAWINGS

Embodiments of inventions will now be described, strictly by way of example, with reference to the accompanying drawings, in which:
FIG. 1 schematically illustrates a side view of an example of an agricultural combine having residue chopper;
FIG. 2 is a cross-section view of an exemplary embodiment of an agricultural residue chopper having an air catch;
FIG. 3 is a cross-section detail of the air catch of the exemplary embodiment of FIG. 2;
FIG. 4 is a cross-section view of a further exemplary embodiment of an agricultural residue chopper having an air catch with an outlet and reflow passage;
FIG. 5 is a cross-section detail of the air catch of the exemplary embodiment of FIG. 4;
FIG. 6 is a cross-section detail of an embodiment of a first shear bar of an exemplary embodiment of an agricultural residue chopper having an air catch; and
FIG. 7 is a cross-section detail of an embodiment of a second shear bar of an exemplary embodiment of an agricultural residue chopper having an air catch.

In the figures, like reference numerals refer to the same or similar elements.

### DETAILED DESCRIPTION OF THE DRAWINGS

Exemplary embodiments of the present invention provide choppers and counterknives that may be used in agricultural equipment (e.g., combines, windrowers, etc.), or in other environments.

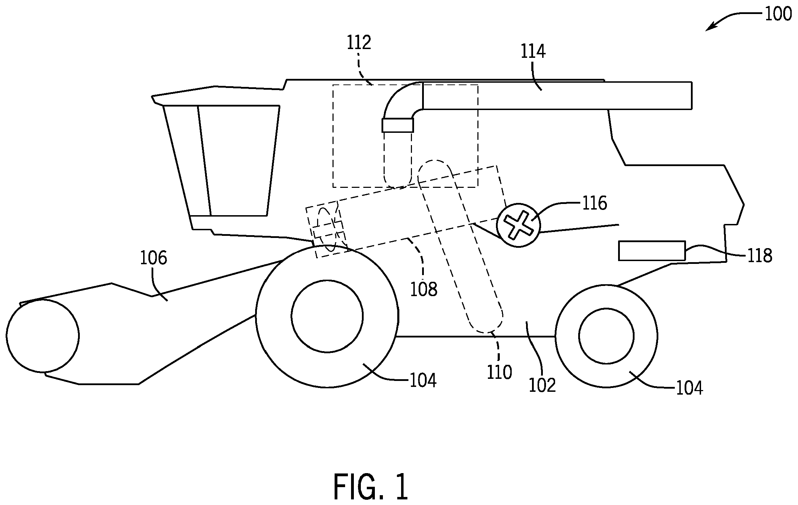

Referring to FIG. 1, an example of an agricultural combine 100 is schematically illustrated. The combine 100 includes a chassis 102 that is supported for movement on the ground by wheels 104 (e.g., pneumatic tires or tracked wheels). A header assembly 106 is attached to the combine 100 and configured to receive crop material and convey such material to a threshing and separating system 108 located in or on the chassis 102. The threshing and separating system 108 separates grain from the remaining crop material (also known as "straw," "material other than grain," "MoG," "crop residue," or simply "residue") and an auger 110 or the like conveys the grain to a grain hopper 112. The threshing and separating system may comprise an axial flow thresher, twin axial flow thresher, crossflow thresher, and so on. An unloader boom 114 may be provided to remove the separated grain as the combine 100 operates.

The residue exits the threshing and separating system 108 and falls into, or is otherwise conveyed to, a crop residue chopper 116, such as those described herein. The residue chopper 116 comminutes the residue, and the residue is then delivered to a spreader 118 that distributes the residue behind the combine 100.

The features described in relation to FIG. 1 are generally conventional, except for the residue chopper 116, and no further explanations of their structures or operations are necessary.

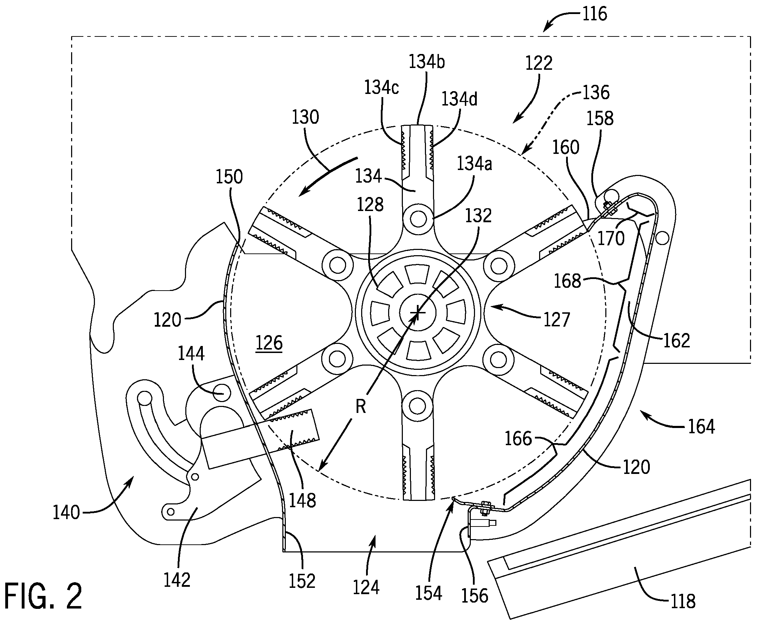

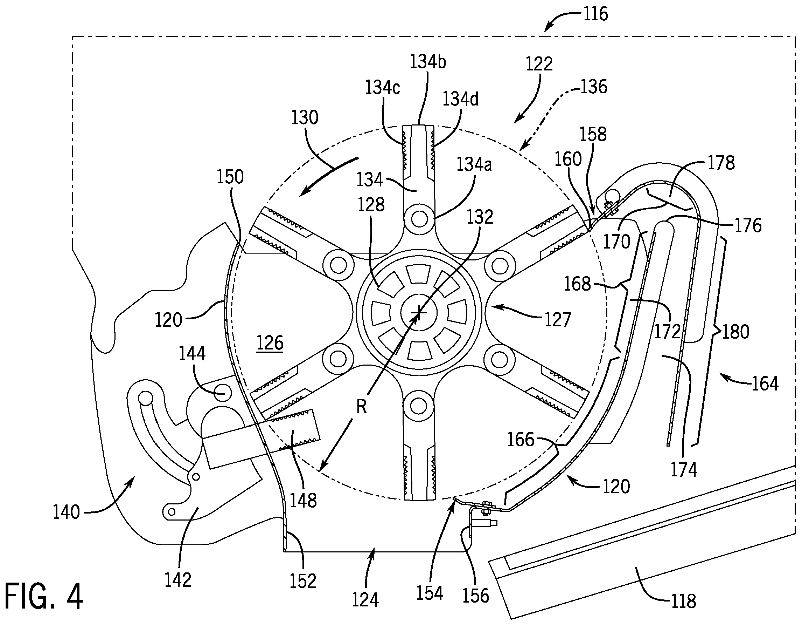

Referring now to FIGS. 2 and 4, exemplary embodiments of a crop residue chopper 116 are illustrated and described in more detail. The chopper 116 includes a housing having sections of housing wall 120 extending between a housing inlet 122 and a housing outlet 124, the housing defining a partially enclosed cutting chamber 126. The housing inlet 122 is configured to direct residue into the path of the cutting knives 134, and the outlet 124 to expel the chopped residue from the cutting chamber 126. The housing 120 may be formed of sheet metal or the like, and may be assembled into a structure that installs within the combine 100, preferably such that the chopper 116 is a replaceable unit.

A cutting knife assembly 127 includes a shaft 128 that is rotatably mounted within the cutting chamber 126 and is configured to rotate in an operating (cutting) direction 130 about a rotation axis 132 extending along a longitudinal direction. Any suitable drive mechanism may be provided to rotate the shaft 128. For example, the shaft 128 may be driven by a hydraulic motor, an electric motor, or via a power takeoff from an internal combustion engine.

Cutting knife assembly 127 further comprises a plurality of cutting knives 134 extending from the shaft 128 at respective axial locations along the longitudinal direction of rotation axis 132. Each knife 134 extends generally radially from a respective proximal end 134a to a respective distal end 134b. The proximal end 134a is fixed to the shaft 128, and the distal end 134b is located at a radial distance R from the shaft. The cutting knives 134 may be rigidly fixed to the shaft 128 or connected by pivoting links (i.e., flail-type connections). The radial distance R defines an outer radius of a cylindrical cutting volume 136. The cutting volume 136 extends in the longitudinal direction (i.e., parallel to the rotation axis 132) as a cylindrical shape along the axial length of the shaft 128, or at least the portion of the shaft 128 spanning the knives 134. It will be appreciated that the knives 134 do not literally occupy the entire cutting volume 136, but instead form a general region including the space in the longitudinal direction L between adjacent knives 134.

The knives 134 are configured to cut crop residue. For example, the leading edge 134c of each knife 134 (i.e., the edge facing in the operating direction 130) may be sharpened, or include serrations, such as shown. The trailing edges 134d also may be sharpened or include serrations, as also shown, which allows the knives 134 to be turned around during service to extend their service life prior to replacement or sharpening.

The crop residue chopper 116 also includes a counterknife assembly 140 comprising one or more counterknives 148 mounted to a counterknife support 142, the counterknives 148 being positioned to extend into the cutting volume 136 at a position, with reference to the cutting direction 130, downstream from the housing inlet 122 and upstream of the housing outlet 124. The counterknife support 142 is movably mounted relative to the housing 120 outside the cutting chamber 126. The counterknife support 142 in this case is rotatably mounted to the housing 120 by a pivot 144, but in other embodiments, the counterknife support 142 may be mounted to the housing 120 by a parallel linkage, a slider, and so on. The counterknife support 142 is configured to move the counterknife 142 through a predetermined range of motion into and out of the cutting volume 136 through openings (not shown) in the section of the housing wall 120 that extends between the closing 150 of the housing inlet 122 and the opening 152 of the housing outlet 124. The counterknife assembly 140 may be manually operated, or operated by a control system.

The counterknife 148 may comprise a serrated, straight or curved sharpened edge facing against the operating direction 130, to thereby present a sharp edge towards the incoming crop residue and enhance the overall cutting action of the chopper 116. The counterknife 148 also may be reversible during service to present a fresh sharpened edge against the operating direction, or to present a different type of edge to the operating direction. For example, the shown counterknife 148 may have a serrated edge on one side, and a straight edge on the opposite side, allowing interchangeability to obtain different performance characteristics.

Any number of counterknives 148 may be attached to the housing 120 in a longitudinal direction. The counterknives 148 may be operated individually, in groups, or all in unison. For example, each counterknife 148 may be attached to an individually movable counterknife support 142, or all of the counterknives 148 may be mounted to a single counterknife support 142 that extends along the longitudinal direction. As another example, each counterknife 148 may be connected to an individual counterknife support 142, but two or more counterknife supports 142 may be connected to move with each other. Other alternatives and variations will be apparent to persons of ordinary skill in the art in view of the present disclosure.

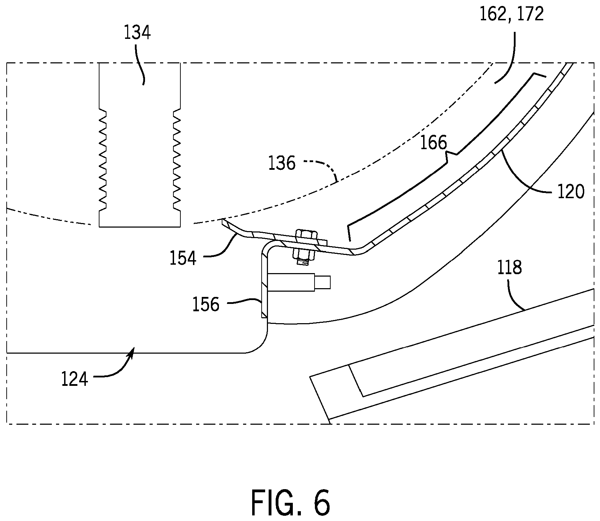

Referring now also to FIG. 6, downstream of the opening 152 of the housing outlet 124, a first shear bar 154 is positioned at the closing 156 of the housing outlet 124, which begins a section of the housing wall 120 extending downstream from the closing 156 of the housing outlet 124 to the opening 158 of the housing inlet 122. A second shear bar 160 is positioned at the opening 158 of the housing inlet 122. Shear bars 154 and 160 each comprise a continuous bar or plate that extends into the cutting chamber 126 from the housing 120, but does not intersect the cutting volume 136. As is conventional, shear bars 154 and 160 extend continuously to span multiple knives 134 along the longitudinal direction of and parallel to rotation axis 132. In a preferred embodiment, the shear bars 154 and 160 extend the full distance of the cutting chamber 126 in the longitudinal direction of rotation axis 132. The shear bars 154 and 160 act as a dam to hold residue adjacent to the cutting volume 136, to thereby enhance chopping (e.g., by providing a surface against which residue can be sheared by the knives 134). The shear bars 154 and 160 may be fixed or movable through a range of travel, and may be straight or include serrations or the like. Other alternatives and variations will be apparent to persons of ordinary skill in the art in view of the present disclosure.

The section of housing wall 120 that extends from the closing 150 of the housing inlet 122 to the opening 152 of the housing outlet 124 has a contour that is generally concentric to the circumference (at radius R) of cutting volume 136, with a relatively small clearance between the inside of housing wall 120 and the distal ends 134b of cutting knives 134. The narrow clearance in this section of housing wall 120 constrains crop residue entering housing inlet 122 largely to cutting volume 136, into the paths of cutting knives 134 and counterknives 148. In the embodiments illustrated in FIGS 2 and 4, this section of housing wall 120 extends from the closing 150 of the housing inlet 122 to the opening 152 of the housing outlet 124 a distance corresponding to about 90 degrees rotation around the rotation axis 132, with the section of housing wall 120 corresponding to the first about 60 of those 90 degrees being generally concentric to the circumference of cutting volume 136 with a relatively small clearance between the inside of housing wall 120 and the distal ends 134b of cutting knives 134.

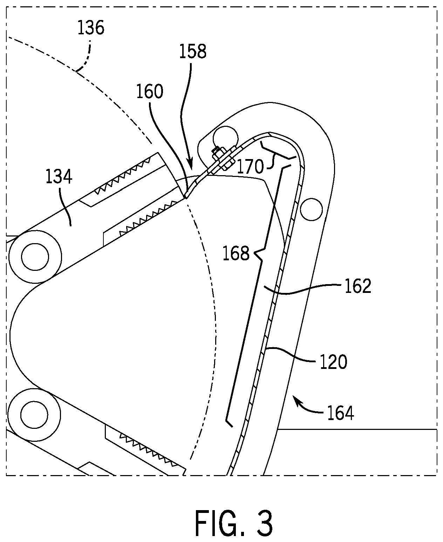

Referring now to FIGS. 2 and 3, a first exemplary embodiment of an agricultural residue chopper assembly 116 comprising a closed air catch 162 is illustrated and described in more detail. Closed air catch 162 is formed by a radially expanded section 164 of the housing wall 120 between the closing 156 of the housing outlet 124 and the opening 158 of the housing inlet 122. By radially expanded it is meant that the position of the inside of the housing wall 120 that extends from the closing 156 of the housing outlet 124 to the opening 158 of the housing inlet 122 is generally at a position that is radially more distal from rotation axis 132 than the section of housing wall 120 between the closing 150 of the housing inlet 122 and the opening 152 of the housing outlet 124 that has a contour that is substantially concentric with the circumference of cutting volume 136 and a relatively small clearance between the inside of housing wall 120 and the distal ends 134b of cutting knives 134.

Radially expanded section 164 of housing wall 120 comprises an upstream section 166 extending downstream from near the housing outlet closing 156 and transitioning to a middle section 168 extending generally towards the opening 158 of the housing inlet 122. In the embodiment illustrated, the upstream section 166 of the radially expanded section 164 of the housing wall 120 is substantially concentric to the outer circumference of the cutting volume 136, and the middle section 168 expands tangentially from the substantially concentric upstream section.

Radially expanded section 164 of the housing wall 120 further comprises a downstream section 170 extending from near the upstream opening 158 of the housing inlet 122 a distance generally outward from the cutting volume 136, then curving arcuately upstream generally toward the middle section 168. The middle section 168 of the radially expanded section 164 of the housing wall 120 joins the arcuately curved downstream section 170 to form a continuous radially expanded section 164 of housing wall 120 between the downstream closing 156 of the housing outlet 124 and the upstream opening 158 of the housing inlet 122. In the embodiment illustrated, the radially expanded section 164 of the housing wall 120 spans a circumferential distance corresponding to more or less about 120 degrees of rotation around axis 132, about 60 degrees of which is traversed by the upstream section 166, and the remaining fraction divided between the middle 168 and downstream 170 sections.

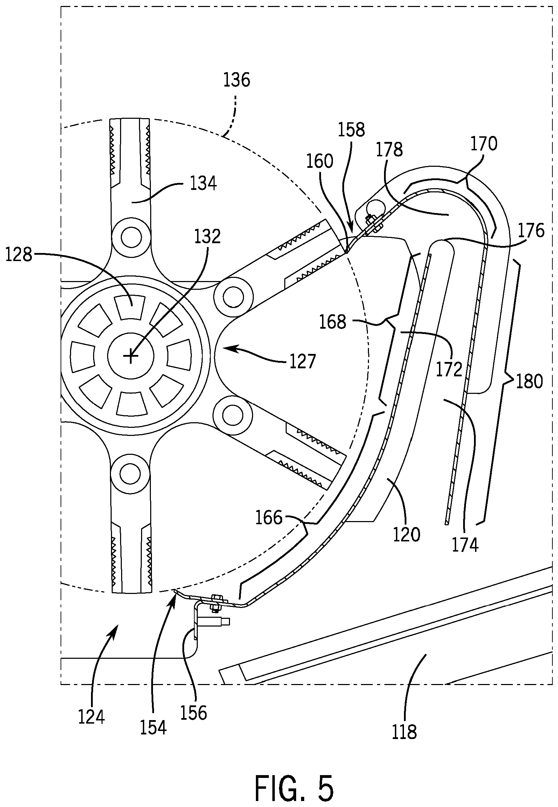

Referring now to FIGS. 4, 5, and 7, a second exemplary embodiment of an agricultural residue chopper assembly 116 comprising an open air catch 172 and reflow conduit 174 is illustrated and described in more detail. The radially expanded section 164 of the housing wall 120 comprises an upstream section 166 extending downstream from near closing 156 of housing outlet 124 and transitioning to a middle section 168 extending generally towards the opening 158 of the housing inlet 122, wherein the middle section 168 of the radially expanded section 164 of the housing wall 122 ends 176 before reaching a point intersecting a line extending generally radially from the cutting knife rotation axis 132 through the upstream opening 158 of the housing inlet 122. The upstream section 166 of the radially expanded section 164 of the housing wall 120 is substantially concentric to the outer circumference of the cutting volume and the middle section expands tangentially from the substantially concentric upstream section.

The radially expanded section 164 of the housing wall 120 further comprises a downstream section 170 extending from near the upstream opening 158 of the housing inlet 122 outward from the cutting volume 136, curving arcuately around the end 176 of the middle section 168 to form an opening 178 in the air catch 172 between the middle 168 and downstream 170 sections, and extending generally upstream past the end 176 of the middle section 168. Extension 180 of downstream section 170 is generally parallel to the middle section 168, forming a reflow conduit 174 for receiving air flow and crop residue redirected from the cutting chamber 126 by the air catch 172 through the opening 178 between the middle 168 and downstream 170 sections of the radially expanded section 164 of the housing wall 120. Redirected air flow and crop residue may be directed by reflow conduit 174 to, for example, spreader 118.

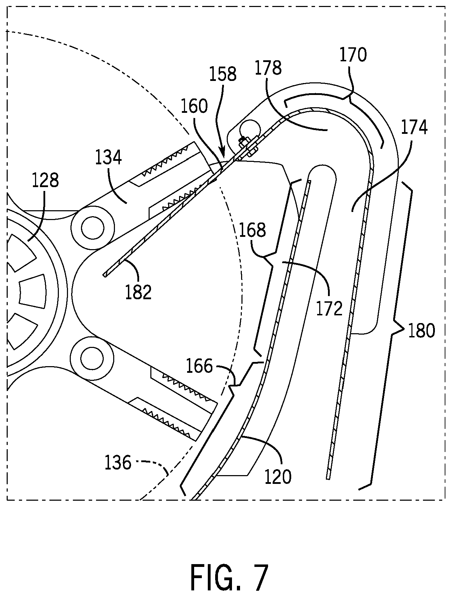

Referring now to FIG. 7, a second shear bar 160 including a cross-knife air catch 182 according to an embodiment is illustrated and described in detail. The second shear bar 160 is positioned at the opening 158 of the housing inlet 122. Shear bar 160 comprises a continuous bar or plate that extends into the cutting chamber 126 from the housing 120, but does not intersect the cutting volume 136. Shear bar 160 extends continuously to span multiple knives 134 along the longitudinal direction of and parallel to rotation axis 132. In a preferred embodiment, second shear bar 160 extends the full distance of the cutting chamber 126 in the longitudinal direction of rotation axis 132. In the embodiment illustrated in FIG. 7, shear bar 160 is extended by cross knife air catch 182. Cross knife air catch 182 extends from shear bar 160 into cutting volume 136 generally in the same direction as shear bar 160 relative to rotation axis 132 and has slots or gaps (not shown) through which cutting blades 134 pass. The angle at which cross knife air catch 180 is oriented may be adjusted to capture and divert more or less air and/or circulating debris into air catch 172. Other alternatives and variations will be apparent to persons of ordinary skill in the art in view of the present disclosure.

## Claims

1. An agricultural residue chopper (116) assembly comprising:
a housing (120) defining a partially enclosed cutting chamber (126), the housing (120) comprising a housing inlet (122) and a housing outlet (124) with respective sections of housing wall (120) extending between the inlet (122) and outlet (124);
a cutting knife assembly (127) comprising a shaft (128) mounted to rotate in a cutting direction (130) within the cutting chamber (126) about a cutting knife rotation axis (132) extending along a longitudinal direction, the cutting knife assembly (127) comprising a plurality of knives (134) extending from the shaft (128) at respective axial locations along the longitudinal direction, each of the plurality of knives (134) extending from a respective proximal end (134a) at the shaft (128) to a respective distal end (134b) at a radial distance from the shaft (128), the radial distance defining an outer radius (R) of a cutting volume (136);
a counterknife assembly (140) comprising one or more counterknives (148) mounted to a counterknife support (142), the counterknives (148) positioned to extend into the cutting volume (136) at a position, with reference to the cutting direction (130), downstream from the housing inlet (122) and upstream from the housing outlet (124);
a first shear bar (154) positioned, at a downstream closing (156) of the housing outlet (124);
a second shear bar (160) positioned downstream of the first shear bar (154), at an upstream opening (158) of the housing inlet (122); and
an air catch (162, 172) formed by a radially expanded section (164) of the housing wall (120) between the downstream closing (156) of the housing outlet (124) and the upstream opening (158) of the housing inlet (122).

2. The agricultural residue chopper (116) assembly of claim 1, wherein the radially expanded section (164) of the housing wall (120) comprises an upstream section (166) extending downstream from near the housing outlet (124) closing to a middle section (168) extending generally towards the opening (158) of the housing inlet (122).

3. The agricultural residue chopper (116) assembly of claim 2, wherein the radially expanded section (164) of the housing wall (120) comprises a downstream section (170) extending from near the upstream opening (158) of the housing inlet (122) a distance generally outward from the cutting volume (136) then curving arcuately upstream generally toward the middle section (168).

4. The agricultural residue chopper (116) assembly of claim 2 or 3, wherein the upstream section (166) of the radially expanded section (164) of the housing wall (120) is substantially concentric to the outer radius (R) of the cutting volume (136) and the middle section (168) expands tangentially from the substantially concentric upstream section (166).

5. The agricultural residue chopper (116) assembly of claim 3 or 4, wherein the middle section (168) of the radially expanded section (164) of the housing wall (120) joins the arcuately curved downstream section (170) to form a continuous radially expanded section (164) of housing wall (120) between the downstream closing (156) of the housing outlet (124) and the upstream opening (158) of the housing inlet (122).

6. The agricultural residue chopper (116) assembly of claims 3 to 5, wherein the middle section (168) of the radially expanded section (164) of the housing wall (120) ends before reaching a point intersecting a line extending substantially radially from the cutting knife rotation axis (132) through the upstream opening (158) of the housing inlet (122), wherein the downstream section (170) curves arcuately around the end (176) of the middle section (168) to form an opening (178) in the air catch (172) between the middle section (168) and the downstream section (170), and extends generally upstream past the end (176) of the middle section (168) and generally parallel to the middle section (168) to form a reflow conduit (174) for receiving air flow redirected from the cutting chamber (126) by the air catch (172) through the opening (178) between the middle section (168) and downstream section (170) of the radially expanded section (164) of the housing wall (120).

7. The agricultural residue chopper (116) assembly of claims 1 to 6, wherein the first shear bar (154) is adjustably fixed near the downstream closing (156) of the housing outlet (124).

8. The agricultural residue chopper (116) assembly of claims 1 to 7, wherein the second shear bar (160) is adjustably fixed near the downstream closing (156) of the housing outlet (124).

9. The agricultural residue chopper (116) assembly of claims 1 to 8, wherein the second shear bar (160) extends into the cutting volume (136).

10. An agricultural harvester machine (100) comprising:
a chassis (102);
powered wheels (104) configured to move the chassis (102) on the surface;
an agricultural residue chopper (116) assembly according to any of the claims 1 to 9; and
a threshing and separating system (108) configured to deliver crop residue to the agricultural residue chopper (116).

## Patentansprüche

1. Landwirtschaftliche Rückstandshäcksleranordnung (116), umfassend:
ein Gehäuse (120), das eine teilweise umschlossene Schneidkammer (126) definiert, wobei das Gehäuse (120) einen Gehäuseeinlass (122) und einen Gehäuseauslass (124) umfasst, wobei sich jeweilige Abschnitte der Gehäusewand (120) zwischen dem Einlass (122) und dem Auslass (124) erstrecken;
eine Schneidmesseranordnung (127), umfassend eine Welle (128), die so montiert ist, dass sie sich in einer Schneidrichtung (130) innerhalb der Schneidkammer (126) um eine sich entlang einer Längsrichtung erstreckende Schneidmesserdrehachse (132) dreht, wobei die Schneidmesseranordnung (127) eine Vielzahl von Messern (134) umfasst, die sich von der Welle (128) an jeweiligen axialen Positionen entlang der Längsrichtung erstrecken, wobei sich jedes der Vielzahl von Messern (134) von einem jeweiligen proximalen Ende (134a) an der Welle (128) zu einem jeweiligen distalen Ende (134b) in einem radialen Abstand von der Welle (128) erstreckt, wobei der radiale Abstand einen äußeren Radius (R.) eines Schneidvolumens (136) definiert;
eine Gegenmesseranordnung (140), umfassend ein oder mehrere Gegenmesser (148), die an einem Gegenmesserträger (142) montiert sind, wobei die Gegenmesser (148) so positioniert sind, dass sie sich an einer Position, in Bezug auf die Schneidrichtung (130), stromabwärts von dem Gehäuseeinlass (122) und stromaufwärts von dem Gehäuseauslass (124) in das Schneidvolumen (136) erstrecken;
eine erste Scherleiste (154), angeordnet an einem stromabwärtigen Abschluss (156) des Gehäuseauslasses (124);
eine zweite Scherleiste (160), angeordnet stromabwärts der ersten Scherleiste (154), an einer stromaufwärts gelegenen Öffnung (158) des Gehäuseeinlasses (122); und
eine Luftfalle (162, 172), gebildet durch einen radial erweiterten Abschnitt (164) der Gehäusewand (120) zwischen dem stromabwärtigen Abschluss (156) des Gehäuseauslasses (124) und der stromaufwärts gelegenen Öffnung (158) des Gehäuseeinlasses (122).

2. Landwirtschaftliche Rückstandshäcksleranordnung (116) nach Anspruch 1, wobei der radial erweiterte Abschnitt (164) der Gehäusewand (120) einen stromaufwärts gelegenen Abschnitt (166) umfasst, der sich von nahe dem Gehäuseauslass (124) stromabwärts erstreckt und in einen mittleren Abschnitt (168) übergeht, der sich im Allgemeinen in Richtung der Öffnung (158) des Gehäuseeinlasses (122) erstreckt.

3. Landwirtschaftliche Rückstandshäcksleranordnung (116) nach Anspruch 2, wobei der radial erweiterte Abschnitt (164) der Gehäusewand (120) einen stromabwärtigen Abschnitt (170) umfasst, der sich von nahe der stromaufwärts gelegenen Öffnung (158) des Gehäuseeinlasses (122) über eine Strecke im Allgemeinen nach außen von dem Schneidvolumen (136) erstreckt und sich dann bogenförmig stromaufwärts im Allgemeinen in Richtung des mittleren Abschnitts (168) krümmt.

4. Landwirtschaftliche Rückstandshäcksleranordnung (116) nach Anspruch 2 oder 3, wobei der stromaufwärts gelegene Abschnitt (166) des radial erweiterten Abschnitts (164) der Gehäusewand (120) im Wesentlichen konzentrisch zum äußeren Radius (R) des Schneidvolumens (136) ist und der mittlere Abschnitt (168) sich tangential von dem im Wesentlichen konzentrischen, stromaufwärts gelegenen Abschnitt (166) erweitert.

5. Landwirtschaftliche Rückstandshäcksleranordnung (116) nach Anspruch 3 oder 4, wobei der mittlere Abschnitt (168) des radial erweiterten Abschnitts (164) der Gehäusewand (120) sich an den bogenförmig gekrümmten stromabwärtigen Abschnitt (170) anschließt, um einen durchgehenden radial erweiterten Abschnitt (164) der Gehäusewand (120) zwischen dem stromabwärtigen Abschluss (156) des Gehäuseauslasses (124) und der stromaufwärts gelegenen Öffnung (158) des Gehäuseeinlasses (122) zu bilden.

6. Landwirtschaftliche Rückstandshäcksleranordnung (116) nach den Ansprüchen 3 bis 5, wobei der mittlere Abschnitt (168) des radial erweiterten Abschnitts (164) der Gehäusewand (120) endet, bevor er einen Punkt erreicht, der eine Linie schneidet, die sich im Wesentlichen radial von der Schneidmesserdrehachse (132) durch die stromaufwärts gelegene Öffnung (158) des Gehäuseeinlasses (122) erstreckt, wobei sich der stromabwärts gelegene Abschnitt (170) bogenförmig um das Ende (176) des mittleren Abschnitts (168) krümmt, um eine Öffnung (178) in der Luftfalle (172) zwischen dem mittleren Abschnitt (168) und dem stromabwärts gelegenen Abschnitt (170) zu bilden, und sich im Allgemeinen stromaufwärts über das Ende (176) des mittleren Abschnitts (168) hinaus und im Allgemeinen parallel zu dem mittleren Abschnitt (168) erstreckt, um eine Rückflussleitung (174) zur Aufnahme eines Luftstroms zu bilden, der von der Schneidkammer (126) durch die Luftfalle (172) durch die Öffnung (178) zwischen dem mittleren Abschnitt (168) und dem stromabwärtigen Abschnitt (170) des radial erweiterten Abschnitts (164) der Gehäusewand (120) umgeleitet wird.

7. Landwirtschaftliche Rückstandshäcksleranordnung (116) nach den Ansprüchen 1 bis 6, wobei die erste Scherleiste (154) nahe dem stromabwärtigen Abschluss (156) des Gehäuseauslasses (124) einstellbar befestigt ist.

8. Landwirtschaftliche Rückstandshäcksleranordnung (116) nach den Ansprüchen 1 bis 7, wobei die zweite Scherleiste (160) in der Nähe des stromabwärtigen Abschlusses (156) des Gehäuseauslasses (124) einstellbar befestigt ist.

9. Landwirtschaftliche Rückstandshäcksleranordnung (116) nach den Ansprüchen 1 bis 8, wobei sich die zweite Scherleiste (160) in das Schneidvolumen (136) erstreckt.

10. Landwirtschaftliche Erntemaschine (100), umfassend:
ein Fahrgestell (102);
angetriebene Räder (104), die konfiguriert sind, um das Fahrgestell (102) auf der Oberfläche zu bewegen;
eine landwirtschaftliche Rückstandshäcksleranordnung (116) nach einem der Ansprüche 1 bis 9 und
ein Dresch- und Trennsystem (108), das konfiguriert ist, um dem landwirtschaftlichen Rückstandshäcksler (116) Erntegutrückstände zuzuführen.

## Revendications

1. Ensemble broyeur de déchets agricoles (116) comprenant :
un boîtier (120) définissant une chambre de coupe (126) partiellement fermée, le boîtier (120) comprenant une entrée (122) de boîtier et une sortie (124) de boîtier comportant des sections respectives de paroi de boîtier (120) s'étendant entre l'entrée (122) et la sortie (124) ;
un ensemble lame de coupe (127) comprenant un arbre (128) monté pour tourner dans une direction de coupe (130) à l'intérieur de la chambre de coupe (126) autour d'un axe de rotation (132) de couteau de coupe s'étendant le long d'une direction longitudinale, l'ensemble lame de coupe (127) comprenant une pluralité de lames (134) s'étendant depuis l'arbre (128) à des emplacements axiaux respectifs le long de la direction longitudinale, chacune de la pluralité de lames (134) s'étendant depuis une extrémité proximale (134a) respective au niveau de l'arbre (128) jusqu'à une extrémité distale (134b) respective à une distance radiale de l'arbre (128), la distance radiale définissant un rayon externe (R) d'un volume de coupe (136) ;
un ensemble contre-lame (140) comprenant une ou plusieurs contre-lames (148) montées sur un support de contre-lame (142), les contre-lames (148) étant positionnés pour s'étendre dans le volume de coupe (136) à une position, par rapport à la direction de coupe (130), en aval de l'entrée (122) du boîtier et en amont de la sortie (124) de boîtier ;
une première barre de cisaillement (154) positionnée, au niveau d'une fermeture aval (156) de la sortie (124) de boîtier ;
une seconde barre de cisaillement (160) positionnée en aval de la première barre de cisaillement (154), au niveau d'une ouverture amont (158) de l'entrée (122) de boîtier ; et
un piège à air (162, 172) formé par une section (164) radialement élargie de la paroi de boîtier (120) entre la fermeture aval (156) de la sortie (124) de boîtier et l'ouverture (158) amont de l'entrée (122) de boîtier.

2. Ensemble broyeur de déchets agricoles (116) selon la revendication 1, dans lequel la section (164) radialement élargie de la paroi de boîtier (120) comprend une section amont (166) s'étendant en aval depuis la proximité de la sortie (124) de boîtier en se refermant vers une section intermédiaire (168) s'étendant généralement vers l'ouverture (158) de l'entrée (122) de boîtier.

3. Ensemble broyeur de déchets agricoles (116) selon la revendication 2, dans lequel la section (164) radialement élargie de la paroi de boîtier (120) comprend une section aval (170) s'étendant depuis la proximité de l'ouverture amont (158) de l'entrée de boîtier (122) sur une distance généralement orientée vers l'extérieur depuis le volume de coupe (136) puis s'incurvant en arc vers l'amont, généralement vers la section médiane (168).

4. Ensemble broyeur de déchets agricoles (116) selon la revendication 2 ou 3, dans lequel la section amont (166) de la section (164) radialement élargie de la paroi de boîtier (120) est sensiblement concentrique au rayon externe (R) du volume de coupe (136), et la section intermédiaire (168) s'étend tangentiellement à partir de la section amont (166) sensiblement concentrique.

5. Ensemble broyeur de déchets agricoles (116) selon la revendication 3 ou 4, dans lequel la section intermédiaire (168) de la section (164) radialement élargie de la paroi de boîtier (120) rejoint la section aval (170) incurvée en arc pour former une section (164) radialement élargie continue de paroi de boîtier (120) entre la fermeture aval (156) de la sortie (124) de boîtier et l'ouverture amont (158) de l'entrée (122) de boîtier.

6. Ensemble broyeur de déchets agricoles (116) selon les revendications 3 à 5, dans lequel la section intermédiaire (168) de la section (164) radialement élargie de la paroi de boîtier (120) se termine avant d'atteindre un point coupant une ligne s'étendant de manière sensiblement radiale depuis l'axe de rotation (132) de lame de coupe à travers l'ouverture amont (158) de l'entrée (122) de boîtier, dans lequel la section aval (170) s'incurve en arc autour de l'extrémité (176) de la section intermédiaire (168) pour former une ouverture (178) dans le piège à air (172) entre la section intermédiaire (168) et la section aval (170), et s'étend généralement en amont au-delà de l'extrémité (176) de la section intermédiaire (168) et généralement parallèlement à la section intermédiaire (168) pour former un conduit de reflux (174) destiné à recevoir le flux d'air redirigé depuis la chambre de coupe (126) par le piège à air (172) à travers l'ouverture (178) entre la section centrale (168) et la section aval (170) de la section (164) radialement élargie de la paroi de boîtier (120).

7. Ensemble broyeur de déchets agricoles (116) selon les revendications 1 à 6, dans lequel la première barre de cisaillement (154) est fixée de manière réglable à proximité de la fermeture aval (156) de la sortie (124) de boîtier.

8. Ensemble broyeur de déchets agricoles (116) selon les revendications 1 à 7, dans lequel la seconde barre de cisaillement (160) est fixée de manière réglable à proximité de la fermeture aval (156) de la sortie (124) de boîtier.

9. Ensemble broyeur de déchets agricoles (116) selon les revendications 1 à 8, dans lequel la seconde barre de cisaillement (160) s'étend dans le volume de coupe (136).

10. Machine de récolte agricole (100) comprenant :
un châssis (102) ;
des roues motrices (104) conçues pour déplacer le châssis (102) sur la surface ;
un ensemble broyeur de déchets agricoles (116) selon l'une quelconque des revendications 1 à 9 ; et
un système de battage et de séparation (108) conçu pour acheminer les déchets de récolte au broyeur de déchets agricoles (116).
